# EUROPÄISCHE PATENTSCHRIFT

(11) **EP 0 964 771 B1**
(45) Veröffentlichungstag und Bekanntmachung des Hinweises auf die Patenterteilung: **21.11.2001**
(21) Anmeldenummer: 98916827.3
(22) Anmeldetag: 03.03.1998
(51) Int. Cl.: B23Q 1/26, B23Q 1/28, B23Q 1/48, B23Q 5/04

(54) **WERKSTÜCKAUFSPANNTISCH**
WORKPIECE CLAMPING TABLE
TABLE DE POSITIONNEMENT POUR PIECES

(30) Priorität: 06.03.1997 DE 19709088
(43) Veröffentlichungstag der Anmeldung: 22.12.1999
(73) Patentinhaber: Wiemers, Karl-Heinz, 39179 Ebendorf (DE)
(72) Erfinder: Wiemers, Karl-Heinz, 39179 Ebendorf (DE)
(74) Vertreter: Leinung, Günter
(86) Internationale Anmeldenummer: DE9800613
(87) Internationale Veröffentlichungsnummer: WO9839140

(56) Entgegenhaltungen:
- US-A- 4 260 307
- US-A- 4 333 363
- US-A- 4 471 331
- US-A- 4 525 852
- US-A- 4 656 408
- PATENT ABSTRACTS OF JAPAN vol. 17, no. 675 (M-1526), 13.Dezember 1993 & JP 05 228760 A (TAMAGAWA SEIKI CO LTD), 7.September 1993,

## Beschreibung

Die Erfindung betrifft einen Werkstückaufspanntisch gemäß dem Oberbegriff des Anspruches 1, der zur Aufnahme von zu bearbeitenden Werkstücken dient oder zu deren Weiterbehandlung und vorzugsweise auch in Transferstraßen zur Montage/Demontage von Baugruppen, wie Geräten, Maschinen, Fahrzeugen oder deren Bestandteilen eingesetzt werden kann.

Aus dem Stand der Technik sind allgemein Werkstückaufspanntische bekannt, welche entsprechend ihrer Einsatzgebiete bzw. Verwendungszwecke ausgeführt sind.

Die bekannten Werkstückaufspanntische sind mit den Nachteilen behaftet, daß sie nur für ganz spezielle Einsatzzwecke Anwendung finden können und eine Zuordnung oder auch Positionierung zu peripheren Einrichtungen kaum möglich ist.

Es ist daher Aufgabe der vorliegenden Erfindung, einen Werkstückaufspanntisch zu entwickeln, welcher allwinklig verstellbar und in Automatisierungseinrichtungen so einsetzbar ist, daß er zu den peripher um den Werkstückaufspanntisch installierten Arbeitsplätzen höchst genau, CNC-gesteuert, entsprechend den vorgesehenen Abläufen angefahren werden kann. Die kurzzyklischen Zustellbewegungen der Automatisierungseinrichtungen sollen dadurch minimiert und deren Genauigkeit optimiert, weiterhin soll die Reduzierung der Montage- und Demontagezeiten sowie die Reduzierung von manuellen Montage/Demontageeingriffen realisiert werden.

Erfindungsgemäß wird die Aufgabe durch die Merkmale des Anspruches 1 gelöst.

In den Unteransprüchen sind besondere Ausgestaltungen und vorteilhafte Lösungen der Erfindung dargestellt.

Der erfindungsgemäße Werkstückaufspanntisch ist so ausgebildet, daß er zu den peripheren Automatisierungseinrichtungen vertikal und allwinklig in Koordination mit den Automatisierungseinrichtungen CNC-gesteuert werden kann.
Dies wird durch magnetische und mechanische Hub-, Antriebs- und Verspannkräfte realisiert, die innerhalb des Werkstückaufspanntisches wirken, wodurch eine Werkstückaufnahmeplatte, auf der die zu bearbeitenden/montierenden bzw. demontierenden Baugruppen/Werkstücke aufgespannt sind, entsprechend positioniert wird. Diese Werkstückaufnahmeplatte dient als auswechselbare Palette, mit der die auf der Werkstückaufnahmeplatte befestigten Baugruppen/Werkstücke zur weiteren Bearbeitung und Behandlung von dem Werkstückaufspanntisch abtransportiert bzw. extern beladen werden können und wiederum dem Werkstückaufspanntisch zugeführt werden kann, ohne daß diese Baugruppen zwischenzeitlich umgerüstet werden müssen.

Dabei ist der erfindungsgemäße Werkstückaufspanntisch als komplette und kompakte Baueinheit ausgeführt, deren Kernstück ein Magnethaltering ist, dem eine magnetische stütz-, positionier- und verspannbare Spanneinrichtung sowie eine Winkelverstell- und Positioniereinrichtung zugeordnet sind. Durch diese Kombination ist es möglich, die Werkstückaufnahmeplatte mit den darauf angeordneten Baugruppen/Werkstücken anzuheben, allwinklig, rotativ und planar zu positionieren, abzusenken und zu verspannen.

Gleichfalls ist der Werkstückaufspanntisch so ausgeführt, daß er in seiner Gesamtheit auswechselbar in verschiedenen gleich großen Maschinengrundgehäusen auch Fundamentgruben in einem Montagehallenboden bzw. in einer Montagehallendecke eingesetzt werden kann, wobei diese kompakte Baugruppe vorzugsweise auf horizontal ausfahrbaren Auflagezungen in den entsprechenden Fundamentgruben zur Auflage kommt und in diesen über horizontal gegen die jeweilige Gehäusewand/Fundamentgrubenwand wirkende Druckspindeln fixierbar ist.

Der Magnethaltering ist erfindungsgemäß so ausgebildet, daß er als tragendes Gehäuse zur Aufnahme der Spanneinrichtung sowie der in der Spanneinheit integrierten Winkelverstell- und Positioniereinrichtung dient, höhenverstellbar ist und gleichzeitig die entsprechenden Elemente zur Positionierung und Lagerung des gesamten Werkstückaufspanntisches aufnimmt.

Es gehört auch zur Erfindung, daß der gesamte Werkstückaufspanntisch über eine hydraulische Hubeinrichtung gehoben bzw. abgesenkt werden kann.

Die magnetisch gestützte und verspannbare Spanneinrichtung besteht nach der Erfindung aus einer Basis-Rotorplatte, einem Tragring und einer die Werkstückaufnahmeplatte aufnehmenden Zentrierplatte, die über Niveaueinstellspindeln sowie einer Kugelkopfstützenspindel mit dem Tragring verbunden ist und mit diesem funktionell im Wirkzusammenhang steht.
Der Magnethaltering kann zur Aufnahme der Spanneinrichtung mit der in dieser integrierten Winkelverstell- und Positioniereinrichtung geöffnet werden und ist mit Hub-, Antriebs- und Verspannmagneten ausgerüstet.

Die erfindungsgemäße Winkelverstell- und Positioniereinrichtung ist unmittelbar im Tragring der Spanneinrichtung angeordnet und besteht aus einer verstellbaren Kugelkopfstützenspindel sowie mehreren, vorzugsweise drei Niveaueinstellspindeln, die einmal in einem Zwischenring gelagert und über Antriebseinheiten verstellt werden können.

Über ein vorgesehenes hydraulisch-mechanisches Hubsystem sind sowohl der Magnethaltering als auch die Kugelkopfstützenspindel der Winkelverstell- und Positioniereinrichtung höhenverstellbar, wodurch sichergestellt werden kann, daß die zu bearbeitenden Werkstücke sowie die zu montierenden/demontierenden Baugruppen auf der Werkstückaufnahmeplatte in den x- und y-Richtungen kombiniert rotativ und planar sowie auch rotativ um die z-Richtung, je nach der erforderlichen Position zu den Automatisierungseinrichtungen, verfahren werden können.

Die Winkelverstell- und Positioniereinrichtung dient der allwinkligen Verstellung der Werkstückaufnahmeplatte, ist innerhalb des Tragringes angeordnet und steht in Wirkverbindung mit einem Zwischenring, in dem sowohl die Verstellantriebe der Kugelkopfstützenspindel als auch die Antriebseinheiten für die Niveaueinstellspindeln integriert sind.

Die Erfindung soll mit Hilfe des in der Zeichnung dargestellten Ausführungsbeispieles näher erläutert werden.

Die einzelnen Figuren zeigen:
- Figur 1:: die Gesamtansicht des Werkstückaufspanntisches im Schnitt,
- Figur 2:: eine Schnittdarstellung A-A nach Figur 1,
- Figur 3:: eine Schnittdarstellung B-B nach Figur 1.

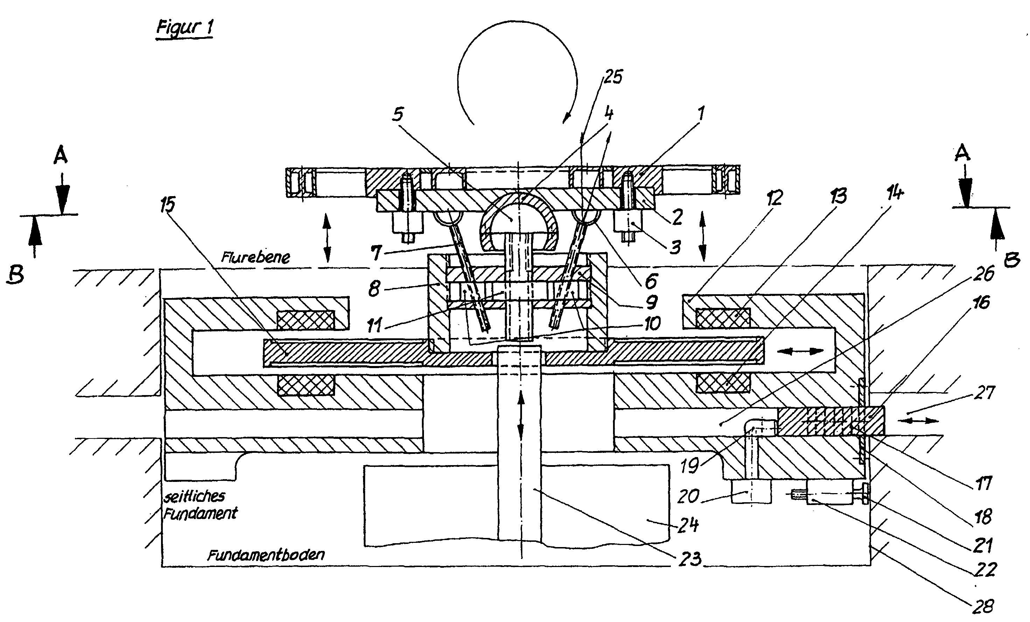

Die Gesamtdarstellung des Werkstückaufspanntisches nach Figur 1 verdeutlicht den Aufbau dieser Einrichtung als kompakte Einheit.

Die Werkstückaufnahmeplatte 1, auf dem die einzelnen zu bearbeitenden oder zu behandelnden Werkstücke/Bauteile/Baugruppen aufgespannt werden, ist über Verspannschraubeinheiten 3 mit einer Zentrierplatte 2 verbunden, welche zentrisch von der Kugelkopfstützenspindel 5 und zusätzlich über die Niveaueinstellspindeln 7 verstellbar zur Spanneinrichtung abgestützt ist.
Beim Einsatz des Werkstückaufspanntisches für Montage-/Demontageprozesse ist die Werkstückaufnahmeplatte 1 als eine in Leichtbauweise und Rahmenkonstruktionen ausgebildete Aufspannplatte ausgeführt.

Die Spanneinrichtung besteht dabei aus dem als Grundgehäuse ausgebildeten Magnethaltering 12, in dessen Innerem die Basis-Rotorplatte 15 magnetisch gelagert ist, was über die Halte/Antriebsmagneten 14 der Basis-Rotorplatte 15 und den im Magnethaltering 12 vorgesehenen Hub-/Antriebsmagneten 13 realisiert wird.

Die Basis-Rotorplatte 15 ist mit dem Tragring 8 verbunden, in dem die gesamte Winkelverstell- und Positioniereinrichtung gelagert ist und die aus den einzelnen Bauteilen der Kugelkopfstützenspindel 5, den Niveaueinstellspindeln 7, deren Antrieben 10; 11 und einem Zwischenring 9 besteht.

Unterhalb des Magnethalteringes 12 ist ein Hubzylinder 24 vorgesehen, welcher so ausgeführt ist, daß der gesamte Werkstückaufspanntisch angehoben bzw. abgesenkt werden kann.
Gleichfalls unterhalb des Magnethalteringes 12 ist zentrisch zum Hubzylinder 24 ein Schnellhubhydraulikzylinder 23 gelagert, der unmittelbar auf die Kugelkopfstützenspindel 5 wirkt, um diese schnell in der Höhe verstellen zu können. Eine Feinpositionierung erfolgt über eine Antriebseinheit 11, welche unterhalb des Zwischenringes 9 angeordnet ist, wobei der Zwischenring 9 selbst innerhalb einer Aussparung des Tragringes 8 gelagert ist.
In diesem Bereich sind auch die Antriebseinheiten 10 für die Niveaueinstellspindeln 7 vorgesehen, die als Kugelrollspindeln bzw. als linearmotorische Höhenverstelleinheiten ausgebildet sind, die gleichfalls in dem Zwischenring 9 gelagert und über die Niveaueinstellspindellager 6 mit der Zentrierplatte 2 verbunden sind.

Die Lagerung der Zentrierplatte 2 zur Kugelkkopfstützenspindel 5 ist so ausgebildet, daß zwischen dem Kugelkopf der Kugelkopfstützen 5 und der Zentrierplatte 2 eine mehrteilige Kugelschale 4 eingelagert ist, mit der sichergestellt wird, daß vertikale Schwenkbewegungen der Zentrierplatte 2 und der Werkstückaufnahmeplatte 1 möglich sind und auch die auf der Werkstückaufnahmeplatte 1 befestigten Baugruppen/Werkstücke um die vertikale Systemachse der Spanneinrichtung verstellt werden können.

Die mehrteilige nachspannbare Kugelschale 4 ist so mit der Zentrierplatte 2 verbunden, daß die Zentrierplatte 2 durch die Kugelkopfstützenspindel 5 getragen und gestützt wird und die Zentrierplatte 2 durch die axial wirkenden Niveaueinstellspindeln 7 über deren Antriebe 10 im Zwischenring 9 in der z-Richtung variiert werden kann. Das bedeutet, die mit 25 bezeichnete z-Richtung gibt den Kraftvektor wieder, wenn die axiale Verstellwirkung der Niveaueinstellspindel 7 in einen vertikalen und horizontalen Vektor zerlegt wird.

Es ist vorteilhaft, wenn der Kugelkopf der Kugelkopfstützenspindel 5 sowie die mehrteilige Kugelschale 4 vorzugsweise aus mit entgegengesetzt gepolten magnetischen Werkstoffen bestehen, wodurch die Gleitbewegungen zwischen diesen beiden Teilen nahezu verschleißfrei erfolgen können.

Die konkave Ausführung der Lagerschalenhälfte in der Zentrierplatte 2 und die konvexe Ausgestaltung des Kopfes der Kugelkopfstützenspindel 5 gewährleisten gleichfalls eine flächenförmige Auflage, was sich positiv auf die unmittelbaren Tragkraftverläufe und die Krafteinwirkungen auf die Winkelverstell- und Positioniereinrichtung sowie des gesamten Werkzeugmaschinentisches auswirkt.

Der Zwischenring 9, in dem sowohl die Niveaueinstellspindeln 7 als auch die Kugelkopfstützenspindel 5 gelagert und geführt sind, ist dabei in seiner unteren Position klauenkupplungsförmig fixiert und in dieser, während eines entsprechenden Bearbeitungsvorganges, in einer ringförmigen Aussparung des Tragringes 8 geführt und seitlich gestützt.
Die Verbindung des Tragringes 8 zur Basis-Rotorplatte 15 erfolgt vorzugsweise über eine Gewindeverbindung, mit der auch sichergestellt ist, daß eine feste Verbindung erreicht wird, gleichzeitig aber auch die Möglichkeit gegeben ist, die Teile untereinander auszutauschen.

Die Verbindungen der Niveaueinstellspindeln 7 zur Zentrierplatte 2 sind so ausgeführt, daß diese eine Verstellung der Zentrierplatte 2 mit der aufgenommenen Werkstückaufnahmeplatte 1 problemlos zulassen. Dies geschieht über die Niveaueinstellspindellager 6, mit denen jede Niveaueinstellspindel 7 ausgerüstet ist und es ist sichergestellt, daß in analoger Weise des Gleitens der Zentrierplatte 2 über die gewölbte Oberfläche der Kugelkopfstützenspindel 5 gleichfalls ein Gleiten über die Niveaueinstellspindellager 6 der Niveaueinstellspindeln 7 möglich wird.
In bevorzugter Ausführung wird die Zentrierplatte 2 mit der aufgespannten und befestigten Werkstückaufnahmeplatte 1 über 120° zueinander versetzt angeordneten Niveaueinstellspindeln 7 gestützt, wodurch eine Dreipunktlagerung gewährleistet ist, welche eine Verstellung der Zentrierplatte 2 mit der Werkstückaufnahmeplatte 1 in einem großen Winkelbereich sichert.

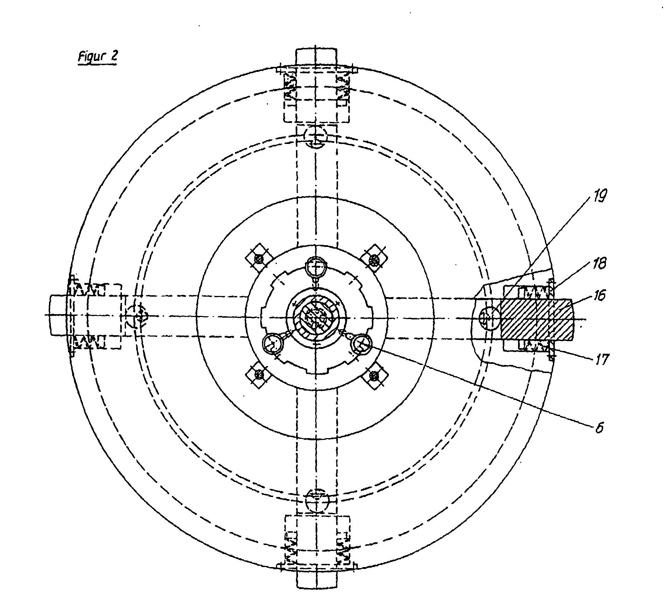

Die Anordnung der Niveaueinstellspindeln 7 zur Zentrierplatte 2 gibt die Figur 2 wieder. Aus der Figur 2 ist gleichfalls ersichtlich, wie die Kugelkopfstützenspindel 5 mit einem Vielkeilprofil ausgebildet ist, über welches diese Kugelkopfstützenspindel 5 mittels des Schnellhubhydraulikzylinders 23 in die gewünschte z-Grobposition verfahren werden kann, während zur Feineinstellung in dieser z-Richtung ein entsprechendes Kugelrollspindelgewinde vorgesehen ist und diese Feineinstellung über die Antriebseinheit 11 erfolgt.
Die Verbindung der Werkstückaufnahmeplatte 1 zur Zentrierplatte 2 wird über die bereits genannten Verspannschraubeinheiten 3 realisiert.

Sowohl aus der Figur 1 als auch aus der Figur 2 ist ersichtlich, wie der gesamte Werkstückaufspanntisch seitlich und umfangseitig gelagert und positioniert werden kann. Zu diesem Zweck sind in den seitlichen Führungen 26, welche im unteren Teil des Magnethalteringes 12 vorgesehen sind, Auflagezungen 16 federnd über Federpakte 17 gelagert. Die Federpakete 17 sind vorzugsweise als Blechpakete ausgeführt und sind seitlich begrenzt durch die Führungsplatten 18 und Ansätzen unmittelbar in den Auflagezungen 16. In diesem Bereich sind gleichfalls Vorschubkurvenscheiben 19 angeordnet, welche unmittelbar mit den jeweiligen Auflagezungen 16 in Wirkzusammenhang stehen und mit Drehantrieben 20 ausgerüstet sind.
Über die Drehantriebe 20 werden die Vorschubkurvenscheibenschrauben 19 derart zu den Auflagezungen 16 verdreht, daß die Vorschubkurvenscheibenschrauben 19 die Auflagezungen 16 gegen die Kraft der Federpakete 17 in die entsprechenden Aufnahmen 27 verschieben.

Über die Auflagezungen 16 erfolgt die Abstützung des gesamten Werkstückaufspanntisches, während über die Druckspindeln 21, welche radial über ihre Antriebe 22 verstellt werden können, eine umfangseitige Arretierung des gesamten Werkstückaufspanntisches gesichert wird. Dabei stützen sich die Druckspindeln 21 an den Wandungen 28 des jeweiligen Maschinengrundgehäuses bzw. der jeweiligen Fundamentgrube ab.

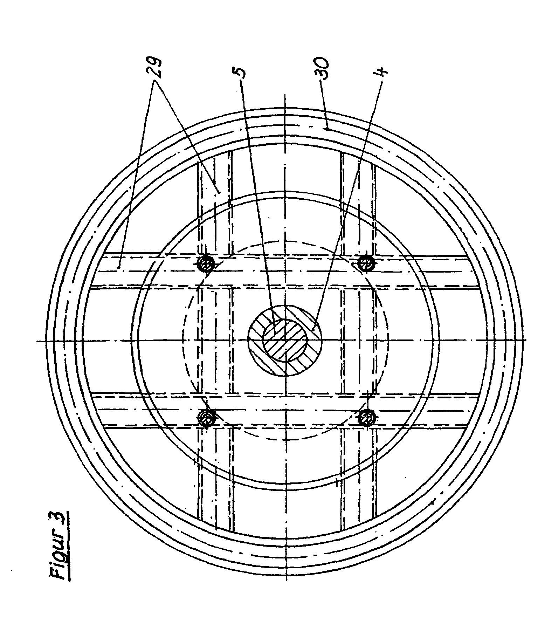

Die Figur 3 gibt eine Ansicht B-B nach Figur 1 wieder und es ist die Unteransicht der als Aufspannplatte ausgebildeten Werkstückaufnahmeplatte 1 dargestellt, welche in Leichtbauweise und vorrangig aus Halbzeugen hergestellt ist.
Wesentliches Konstruktionsmerkmal der Aufspannplatte ist, daß diese Aufspannplatte aus quer- und längs verlaufenden Holmen besteht, welche umfangseitig von einem kreisrunden Ring 30 umschlossen werden.

Nachfolgend soll der Funktionsablauf des erfindungsgemäßen Werkstückaufspanntisches beschrieben werden, wobei ausgeführt werden muß, daß, wie in Figur 1 deutlich dargestellt, zwischen dem Magnethaltering 12 und der Basis-Rohrplatte 15 sowie zwischen dem Tragring 8 und dem Oberteil des Mangethalteringes 12 sogenannte Freiräume vorhanden sind, die so gewählt werden, daß die gesamte Spanneinrichtung und damit auch der am Tragring 8 befestigten Werkstückaufnahmeplatte 1 mit den auf darauf befestigten Montage-/Demontagebaugruppen/Werkstücken rotativ wie auch planar zur horizontalen Positionierung der aufgespannten Baugruppen verfahren werden kann. Die allwinklige Positionierung der Baugruppen erfolgt in Kombination mit der beschriebenen horizontalen Positionierung durch die Winkelpositionierung mittels der Winkelverstell- und Positioniereinrichtung, so daß damit die jeweils definierten Raumpunkte an den Baugruppen zu den Automatisierungseinrichtungen oder anderen Einrichtungen in Position gebracht werden können.

Durch die Auswechselbarkeit der Werkstückaufnahmeplatte 1 zur Zentrierplatte 2 und damit zur Spann- und Winkelverstell- und Positioniereinrichtung ist es möglich, daß die Werkstückaufnahmeplatte 1 extern mit der oder den zu montierenden bzw. demontierenden Baugruppen/
Werkstücken bestückt werden kann. Diese werden mit Referenzpunkten versehen, so daß mittels dieser Referenzpunkte deren Einmessung zu den peripheren Automatisierungseinrichtungen oder anderen Einrichtungen erfolgen kann. Es ist eine vorteilhafte Ausführung des erfindungsgemäßen Gegenstandes, daß ein mechanisch, pneumatisch oder hydraulisch höhenverstellbarer Transportwagen die Werkstückaufspannplatte 1 aufnehmen kann. Der Transportwagen wird dann über die sich auf dem Montagehallenflurniveau befindlichen Zentrierplatte 2 des Werkstückaufspanntisches gefahren und nach Erreichung der endschalterbegrenzten Absenkposition wird die Werkstückaufnahmeplatte 1 zur Zentrierplatte 2 abgesenkt und mittels der flexiblen Verspannschraubeinheiten 3 mit dieser verspannt. Danach wird der Transportwagen aus dem Maschinenbereich des Werkstückaufspanntisches abgezogen.

Die aufgespannten Baugruppen/Werkstücke werden mit ihren Referenzpunkten durch das Heranfahren an die Automatisierungseinrichtungen oder anderen Einrichtungen in deren Systemachsen eingemessen und mit der Systemachse des Werkstückaufspanntisches abgestimmt. Damit kann das jeweils eingegebene Bearbeitungs-, Montage-/Demontageprogramm gestartet werden, wobei mit der Bewegungskombination der Spanneinrichtung und der Winkelverstell- und Positioniereinrichtung jeder Raumpunkt in entsprechender Position den peripheren Automatisierungs- und sonstigen Einrichtungen zugestellt werden kann.

In vortelhafter Weise kann eine Einrichtung vorgesehen sein, die aus mitgeführten bzw. mehreren stationären Bildaufnahme- und Verarbeitungssystemen besteht, somit optisch die Ist-Positionen erfaßt werden können, die innerhalb der Fertigungstoleranzen bei der Bearbeitung/Montage bzw. außerhalb derselben bei der Demontage, erkannt und korrigiert werden, so daß die genaue Position für den jeweiligen Bearbeitungs-/Montage- und Demontageangriffspunkt sichergestellt wird.

Nach Erreichen des gewünschten Bearbeitungs-/Montage-/Demontageumfanges wird wieder mit dem schon genannten höhenverstellbaren Transportwagen der Werkstückaufspanntisch
überfahren und die Werkstückaufnahmeplatte 1 oder der Aufspannrahmen mit den darauf befindlichen Baugruppen, nach dem Lösen der Verspannschraubeinheiten 3 zwischen der Zentrierplatte 2 und der Werkstückaufnahmeplatte 1, aus der Zentrierung ausgehoben und abtransportiert.
An anderer Stelle kann mit dieser oder einer nächsten Montage-/Demontageeinrichtung mit anderen peripheren Einrichtungen die Fortsetzung der Montage-/Demontage oder die Weiterbehandlung der montierten Baugruppen erfolgen, wozu die Meßwertdaten des vorherigen Montage-/Demontageablaufes in den CNC-Programmspeicher der Folgeeinrichtungen transferiert werden können.
Damit ist die Möglichkeit gegeben, verschiedene Montage-/Demontageabläufe bzw. Weiterbearbeitungen oder Weiterbehandlungen der sich auf der Werkstückaufnahmeplatte 1 befindlichen Baugruppen kombinieren zu können.

## Patentansprüche

1. Werkstückaufspanntisch zur Aufnahme von zu bearbeitenden Werkstücken und von zu montierenden/demontierenden Baugruppen, welcher drehbar, schwenkbar und verstellbar ist und somit entsprechende Freiräume besitzt, **dadurch gekennzeichnet, daß**
ein Magnethaltering (12) als tragendes Gehäuse zur Aufnahme einer Spanneinrichtung mit Winkelverstell- und Positioniereinrichtung ausgebildet ist, wobei eine Basis-Rotorplatte (15) im Inneren des Magnethalteringes (12) durch dessen Hub-/Antriebseinheiten (13) und Halte-/Antriebseinheiten (14) magnetisch gelagert ist und der Magnethaltering (12) zur Aufnahme der Basis-Rotorplatte (15) geöffnet werden kann, der Magnethaltering (12) ist verstellbar ausgebildet, so daß der gesamte Werkstückaufspanntisch auswechselbar in Maschinengrundgehäusen oder Fundamentgruben eingesetzt werden kann, wobei die Fixierung durch am unteren Bereich des Magnethalteringes (12) horizontal ausfahrbar gelagerte Auflagezungen (16) und durch unterhalb des Magnethalteringes (12) angeordnete Druckspindeln (21), die horizontal gegen die jeweilige Gehäusewand/Fundamentgrubenwand wirken, erfolgt.

2. Werkstückaufspanntisch nach Anspruch 1, **dadurch gekennzeichnet, daß**
die Spanneinrichtung aus einer Basis-Rotorplatte (15), aus einem Tragring (8) und einer die Werkstückaufnahmeplatte (1) aufnehmenden Zentrierplatte (2) besteht, die über eine Kugelkopfstützenspindel (5) und Niveaueinstellspindeln (7) mit dem Tragring (8) verbunden sind.

3. Werkstückaufspanntisch nach den Ansprüchen 1 und 2, **dadurch gekennzeichnet, daß**
die Winkelverstell- und Positioniereinrichtung innerhalb des Tragringes (8) angeordnet ist und aus der Kugelkopfstützenspindel (5), den Niveaueinstellspindeln (7) sowie einem Zwischenring (9) besteht, wobei die Kugelkopfstützenspindel (5) mit einer Antriebseinheit (11) und die Niveaueinstellspindeln (7) je mit einer Antriebseinheit (10) ausgerüstet sind, in dem Zwischenring (9) geführt und innerhalb einer ringförmigen Aussparung im Tragring (8) verstellbar angeordnet sind.

4. Werkstückaufspanntisch nach einem der Ansprüche 1 bis 3, **dadurch gekennzeichnet, daß**
der Tragring (8) in der Basis-Rotorplatte (15) auswechselbar angeordnet ist, die Werkstückaufnahmeplatte (1) zur Zentrierplatte (2) über Verspannschraubeinheiten (3) lösbar befestigt ist, unterhalb des Magnethalteringes (12) ein Hubzylinder (24) und zentrisch des Hubzylinders (24) ein Schnellhubhydraulikzylinder (23) angeordnet sind.

5. Werkstückaufspanntisch nach einem der Ansprüche 1 und 3, **dadurch gekennzeichnet, daß**
die Kugelkopfstützenspindel (5) als auch die Niveaueinstellspindeln (7) über ihre Antriebseinheiten (11; 10) gemeinsam, einzeln und in verschiedene Endpositionen verstellt werden können, wobei die Niveaueinstellspindeln (7) sowohl als Kugelrollspindeln als auch als linearmotorische Höhenverstelleinheiten ausgebildet sein können.

6. Werkstückaufspanntisch nach einem der Ansprüche 1 bis 5, **dadurch gekennzeichnet, daß**
die Niveauseinstellspindeln (7) über Niveaueinstellspindellager (6) und die Kugelkopfstützenspindel (5) über eine mehrteilige Kugelschale (4) mit der Zentrierplatte (2) verbunden sind.

7. Werkstückaufspanntisch nach einem der Ansprüche 1 bis 6, **dadurch gekennzeichnet, daß**
die Kugelkopfstützenspindel (5), mit ihrem Kugelkopf in der mehrteiligen Kugelschale (4) gleitend gelagert ist, der Kugelkopf der Kugelkopfstützenspindel (5) und die mehrteilige Kugelschale (4) mit entgegengesetzt gepolten magnetischen Werkstoffen ausgestattet sind, wodurch die Gleitbewegungen des Kugelkopfes in der Kugelschale (4) nahezu verschleißfrei erfolgen können.

8. Werkstückaufspanntisch nach einem der Ansprüche 1 bis 7, **dadurch gekennzeichnet, daß**
der Magnethaltering (12) mit Hub-/Antriebseinheiten (13) und Halte-/Antriebseinheiten (14) bestückt ist, wobei die Antriebseinheiten als Drehstromlinearmotore ausgebildet sind.

9. Werkstückaufspanntisch nach einem der Ansprüche 1 bis 8, **dadurch gekennzeichnet, daß**
in den Führungen (26) des Magnethalteringes (12) horizontal verstellbare Auflagezungen (16) angeordnet sind, die mit über Drehantrieben (20) verstellbaren Vorschubkurvenscheibenschrauben (19) in Wirkzusammenhang stehen und den Auflagezungen (16) Federpakete (17) zugeordnet sind.

10. Werkstückaufspanntisch nach einem der Ansprüche 1 bis 9, **dadurch gekennzeichnet, daß**
unterhalb des Magnethalteringes (12) Druckspindeln (21) umfangseitig angeordnet sind, denen je ein Antrieb (22) zugeordnet ist.

11. Werkstückaufspanntisch nach einem der Ansprüche 1 bis 8, **dadurch gekennzeichnet, daß**
der gesamte Werkstückaufspanntisch zu peripheren Bearbeitungs- und Montagesystemen zugeordnet werden kann.

12. Werkstückaufspanntisch nach einem der Ansprüche 6 bis 11, **dadurch gekennzeichnet, daß**
mehrere, vorzugsweise drei Niveaueinstellspindeln (7), in einer 120°-Teilung versetzt, im Zwischenring (9) geführt und an der Zentrierplatte (2) über die Niveaueinstellspindellager (6) befestigt sind.

13. Werkstückaufspanntisch nach einem der Ansprüche 1 bis 12, **dadurch gekennzeichnet, daß**
die Werkstückaufnahmeplatte (1) als kompakte Aufnahmeplatte oder als Aufspannrahmen ausgebildet ist, wobei der Aufspannrahmen in Leichtbauweise aus Halbzeugen hergestellt ist und aus Längs- und Querstreben (29) besteht, welche von einem umlaufenden Ring (30) umfangseitig geschlossen sind.

14. Werkstückaufspanntisch nach einem der Ansprüche 1 bis 13, **dadurch gekennzeichnet, daß**
der Werkstückaufspanntisch auswechselbar in verschieden gleich großen Maschinengrundgehäusen/Fundamentgruben (28) in Montagehallenböden bzw. in Montagehallendecken eingesetzt werden kann, wobei der gesamte Werkstückaufspanntisch auf horizontal ausfahrbaren Auflagezungen (16) in den entsprechenden Maschinengrundgehäusen/Fundamentgruben (28) ruht und über die Druckspindeln (21) horizontal gegen die jeweilige Wandung fixiert wird.

## Claims

1. The workpiece clamping table for accommodating workpieces to be machined and assembly groups that require assembling/disassembling is rotatable, pivotable and adjustable, and thus occupies corresponding free spaces; **characterised therein that**
a magnetic supporting ring (12) is designed as a support housing for the accommodating of a clamping device with an angle-adjusting and positioning device, whereby a base rotor plate (15) is magnetically supported inside the magnetic supporting ring (12) by lift/drive units (13) and hold/drive units (14) and the magnetic supporting ring (12) can be opened for the accommodation of the base rotor plate (15). The magnetic supporting ring (12) is designed to be adjustable so that the entire workpiece clamping table can be employed interchangeably in basic engine housings or foundation excavations. This is fixed by support tongues (16), which are supported in the lower area of the magnetic supporting ring (12) so as to be horizontally displaceable, and by pressure screws (21), arranged below the magnetic support ring (12), which act horizontally against the respective housing wall/ foundation excavation wall.

2. The workpiece clamping table, in accordance with claim 1, **characterised therein that:**
the clamping device consists of a base rotor plate (15), a supporting ring (8) and a centering plate (2) to accommodate the workpiece take-up plate (1), which are connected to the supporting ring (8) via a ball end support screw (5) and a level-adjusting screw (7).

3. The workpiece clamping table, in accordance with the claims 1 and 2, **characterised therein that:**
the angle-adjusting and positioning device is located inside the supporting ring (8) and consists of the ball end support screw (5), the level-adjusting screws (7) as well as an intermediate ring (9). The ball end support screw (5) is fitted with a drive unit (11) and similarly the level-adjusting screws are each equipped with a drive unit (10), guided inside the intermediate ring (9) and installed within an annular recess so as to be adjustable.

4. The workpiece clamping table, in accordance with one of the claims 1 to 3, **characterised therein that:**
the supporting ring (8) is located in the base rotor plate (15) so as to be interchangeable. The workpiece accommodating plate (1) is fastened to the centering plate (2) via bracing screw units (3) so as to be detachable. A lifting cylinder (24) is situated below the magnetic supporting ring (12) and a quick-lifting hydraulic cylinder (23) is centrally aligned to the lifting cylinder (24).

5. The workpiece clamping table, in accordance with one of the claims 1 and 3, **characterised therein that:**
the ball end support screw (5) as well as the level-adjusting screws (7) can be adjusted either jointly, individually or in various end positions via their drive units (11; 10), whereby the level-adjusting screws (7) may be configured both as a ball roll screw and as linear motor-operated elevation adjusting units.

6. The workpiece clamping table, in accordance with the one of the claims 1 to 5, **characterised therein that:**
The level-setting screws (7) are connected to the centering plate (2) via level-setting screw bearings (6) and the ball end support screw (5) via a multipart ball cup.

7. The workpiece clamping table, in accordance with one of the claims 1 to 6, **characterised therein that:**
the ball end support screw (5) is supported in the multipart ball cup (4) with its ball head, so as to be sliding. The ball head of the ball end support screw (5) and the multipart ball cup (4) are equipped with oppositely poled magnetic materials, producing an almost abrasion-free slip movement of the ball head in the ball cup (4).

8. The workpiece clamping table, in accordance with one of the claims 1 to 7, **characterised therein that:**
the magnetic supporting ring (12) is provided with lift/drive units (13) and hold/drive units (14). The drive units are arranged in the form of three-phase linear motors.

9. The workpiece clamping table, in accordance with one of the claims 1 to 8, **characterised therein that:**
horizontally adjustable support tongues (16) are arranged in the guides (26) of the magnetic supporting ring (12), which interact with the feed cam disk screws (19) via the adjustable rotary drives (20). The spring piles (17) are allocated to the support tongues (16).

10. The workingpiece clamping table, in accordance with one of the claims 1 to 9, **characterised therein that:**
the pressure screws (21) are arranged on the periphery below the magnetic support ring (12). Each has a drive (22) allocated to them.

11. The workingpiece clamping table, in accordance with claims 1 to 8, **characterised therein that,**
the entire workpiece clamping table can be allocated to peripheral processing and assembly systems.

12. The workpiece clamping table, in accordance with one of the claims 6 to 11, **characterised therein that:**
several, preferably three, level-setting screws (7) are guided in the intermediate ring (9), staggered at a 120° division, and fastened to the centering plate (2) via the level-setting screw bearing (6).

13. The workpiece clamping table, in accordance with claims 1 to 12, **characterised therein that:**
the workpiece mounting plate (1) is configured as a compact take-up plate or as a clamping frame, whereby the clamping frame is manufactured in a lightweight construction from semi-finished products and consists of longitudinal and diagonal ribs (29), which are enclosed by a circular ring (30) on the periphery.

14. The workpiece clamping table, in accordance with one of the claims 1 to 13, **characterised therein that,**
the entire workpiece clamping table can be inserted interchangeably in various equally large basic machine housings/ foundation excavations (28) on assembly shop floors or in assembly shop ceilings, whereby the entire workpiece clamping table rests on horizontally extendable support tongues (16) in the corresponding basic machine housings/foundation excavations (28) and is fixed horizontally against the respective wall via the pressure screws (21).

## Revendications

1. Table de fixation pour l'insertion de pièces à usiner et d'ensembles de pièces à monter/démonter, orientable, pivotante, réglable et avec les dégagements appropriés, **caractérisée par le fait que**
un anneau de fixation magnétique (12) est en forme de châssis support pour l'insertion d'un dispositif de serrage avec dispositif d'ajustage angulaire et de positionnement, une plaque rotative de base (15) étant fixée à aimant à l'intérieur de l'anneau de fixation magnétique (12) par ses unités de levage/d'entraînement (13) et unités de retenue/d'entraînement (14); l'anneau de fixation magnétique (12) peut être ouvert pour l'insertion de la plaque rotative de base (15); l'anneau de fixation magnétique (12) peut être réglé et la table de fixation d'usinage tout entière peut être utilisé et échangé dans des châssis de base de machines ou des fosses de fondation, la fixation ayant lieu par des languettes (16) télescopiques situées en bas de l'anneau de fixation (12) et par des vis de fixation (21) qui agissent sur le plan horizontal contre la paroi du châssis/de la fosse de fondation.

2. Table de fixation de pièces à usiner d'après la revendication numéro 1, **caractérisée par le fait que**
le dispositif de serrage comprend une plaque rotative de base (15), un anneau support (8) et une plaque de centrage (2) pour l'insertion de la plaque de fixation des pièces (1) et est relié à l'anneau support (8) par une broche support à tête sphérique (5) et une broche de réglage de niveau (7).

3. Table de fixation de pièces à usiner d'après les revendications numéro 1 et 2, **caractérisée par le fait que**
le dispositif d'ajustage angulaire et de positionnement se trouve à l'intérieur de l'anneau support (8) et comprend la broche support à tête sphérique (5), les broches de réglage de niveau (7) ainsi qu'un anneau intermédiaire (9), la broche support à tête sphérique (5) et les broches de réglage de niveau (7) étant chacune dotées d'une unité d'entraînement (11), introduites dans l'anneau intermédiaire (9) et placées dans un évidemment annulaire dans l'anneau support (8).

4. Table de fixation de pièces à usiner d'après les revendications 1 à 3, **caractérisée par le fait que**
l'anneau support (8) se trouve dans la plaque rotative de base (15) et peut être échangé, la plaque de fixation des pièces à usiner (1) est fixée dans la plaque de centrage (2) à l'aide d'unités de vis de serrage (3) et peut être enlevée; un vérin hydraulique (24) se trouve en-dessous de l'anneau de fixation magnétique (12) et un cylindre de levage rapide (23) est situé au centre du vérin hydraulique (24).

5. Table de fixation de pièces à usiner d'après l'une des revendications 1 et 3, **caractérisée par le fait que**
la broche support à tête sphérique (5) et la broche de réglage de niveau (7) peuvent être réglées ensemble, individuellement et dans différentes positions par l'intermédiaire de leur unité d'entraînement (11, 10), les broches de réglage de niveau (7) pouvant être conçues toutes les deux comme broches filetées à billes et comme unités de réglage en hauteur à mouvement linéaire.

6. Table de fixation de pièces à usiner d'après l'une des revendications 1 et 5, **caractérisée par le fait que**
les broches de réglage de niveau (7) sont reliées à la plaque de centrage (2) par l'intermédiaire d'un palier à broche de réglage de niveau (6) et la broche support à tête sphérique (5) par l'intermédiaire d'un tourillon sphérique multiple (4).

7. Table de fixation de pièces à usiner d'après l'une des revendications 1 à 6, **caractérisée par** le faite que
la tête sphérique de la broche support à tête sphérique (5) coulisse dans le tourillon sphérique multiple (4), la tête sphérique de la broche support à tête sphérique (5) et le tourillon sphérique multiple (4) comportent des aimants à pôles contraires, les mouvements coulissants de la tête sphérique dans le tourillon (4) sont presque sans usure.

8. Table de fixation de pièces à usiner d'après l'une des revendications 1 à 7, **caractérisée par le fait que**
l'anneau de fixation magnétique (12) est doté d'unités de levage/d'entraînement (13) et d'unités de retenue/d'entraînement (14), les unités d'entraînement étant des moteurs linéaires à courant triphasé.

9. Table de fixation de pièces à usiner d'après l'une des revendications 1 à 8, **caractérisée par le fait que**
des languettes à réglage horizontal (16) se trouvent dans les guidages (26) de l'anneau de fixation magnétique (12) qui agissent avec des vis à came d'avance (19) réglables par l'intermédiaire d'entraînements rotatifs (20) et que des blocs-ressorts (17) sont affectés aux languettes (16).

10. Table de fixation de pièces à usiner d'après l'une des revendications 1 à 9, **caractérisée par le fait que**
des vis de fixation (21) se trouvent sur le pourtour de l'anneau de fixation magnétique (12) sur la partie inférieure, chacune ayant un entraînement (22).

11. Table de fixation de pièces à usiner d'après l'une des revendications 1 à 8, **caractérisée par le fait que**
la table de fixation de pièces à usiner tout entière peut être assemblée en systèmes périphériques d'usinage et de montage.

12. Table de fixation de pièces à usiner d'après l'une des revendications 6 à 11, **caractérisée par le fait que**
plusieurs broches de réglage de niveau (7), de préférence 3, sont placées à angles de 120°, introduites dans l'anneau intermédiaire (9) et fixées à la plaque de centrage (2) par l'intermédiaire de la broche de réglage de niveau (6).

13. Table de fixation de pièces à usiner d'après l'une des revendications 1 à 12, **caractérisée par le fait que**
la plaque de fixation des pièces (1) est conçue comme plaque de fixation compacte ou comme cadre de fixation, le cadre de fixation étant en construction légère en produits demi-finis et comprenant des entretoises longitudinales et diagonales (29) qui sont fermées par un anneau circulaire (30) située sur la périphérie.

14. Table de fixation de pièces à usiner d'après l'une des revendications 1 à 13, **caractérisée par le fait que**
la table de fixation de pièces à usiner peut être insérée dans des bâtis de machines/fosses de fondation (28) dans le sol ou le plafond de halls de montage et qu'elle peut être enlevée, la table de fixation tout entière reposant sur des languettes support (16) se déplaçant à l'horizontale dans les châssis de machines/fosses de fondation (28) et étant fixée à l'horizontale par l'intermédiaire des vis de fixation (21) à la paroi respective.
